# EUROPÄISCHE PATENTANMELDUNG

(11) **EP 0 595 041 A2**
(43) Veröffentlichungstag der Anmeldung: **04.05.1994**
(21) Anmeldenummer: 93115602.0
(22) Anmeldetag: 28.09.1993
(51) Int. Cl.: F16B 19/10, B23K 11/093

(54) **Befestigung, insbesondere an nur einseitig zugänglichen Durchgangsbohrungen**

(30) Priorität: 29.09.1992 DE 4232535; 28.01.1993 FR 9300872
(71) Anmelder: Böllhoff & Co, GmbH & Co KG, D-33649 Bielefeld (DE)
(72) Erfinder: Kobusch, Klaus, D-33613 Bielefeld (DE); Filiot, Gérard, F-73290 La Monte Servolex (FR)
(74) Vertreter: Bergen, Klaus, Dipl.-Ing.

(57) **Zusammenfassung**

Befestigung, insbesondere an nur einseitig zugänglichen Durchgangsbohrungen, aus einer Stauchhülse (30, 40) mit flanschartigem Ende (2, 32, 42) sowie alternativ einem Einsatzteil (56) mit einem zylindrischen Kopf (7) etwa gleichen Durchmessers wie die Stauchhülse (1), dessen Kopf (7) mit der Stauchhülse (1) über eine Anfasung (8) an der Stauchhülse (1) und/oder am Kopf (7) widerstandspreßverschweißt ist, oder einem Innengewinde am anderen Ende der Stauchhülse (30) oder einem geschlossenen Ende der Stauchhülse (40).

## Beschreibung

Die Erfindung betrifft eine Befestigung, inbesondere an nur einseitig zugänglichen Durchgangsbohrungen aus einer Stauchhülse mit flanschartigem Ende.

Bei einer derartigen, in der deutschen Patentschrift 25 20 586 beschriebenen Befestigung mit einem bolzenartigen Einsatzteil mit einem Kopf etwa gleichen Durchmessers wie die Stauchhülse, deren freies Ende mit dem Einsatzteil verschweißt ist, besteht die Verbindung zwischen dem Einsatzteil und der Stauchhülse aus vier um 90° zueinander versetzten Punktschweißungen am Umfang der Stauchhülse.

Mit dieser Verbindung soll erreicht werden, daß es bei den hohen mechanischen Belastungen, die beim Stauchen der Hülse auftreten, nicht zum sogenannten Flaschenöffnereffekt kommt, bei dem sich aufgrund der wulstartigen Verformung der Stauchhülse während des Stauchens im Bereich der Schweißpunkte zwischen der Stirnfläche der Stauchhülse und der Unterseite des flanschartigen Kopfes des Einsatzteils zu starke mechanische Beanspruchungen ergeben, die ein Ausreißen der Verbindung zwischen Stauchhülse und Einsatzteil zur Folge haben. Nachteilig ist bei dieser bekannten Befestigung jedoch, daß keine druckdichte Verbindung zwischen dem Einsatzteil und der Stauchhülse gewährleistet ist, was dazu führen kann, daß Feuchtigkeit in einen sonst unzugänglichen Hohlraum eindringt und dort Korrosionen verursacht.

Bei einer aus der US-Patentschrift 20 38 189 bekannten Befestigung ist zwar die Dichtheit zwischen dem Kopf des zylindrischen Einsatzteils und der Stauchhülse dadurch gegeben, daS die Naht zwischen dem Kopf und der Stauchhülse mittels Lichtbogen oder durch Widerstandspreßschweißen mit Hilfe von um den Außenumfang der Hülse herumlaufenden Rollen dicht geschweißt wird. Aufgrund des Verlaufs der Schweißnaht ist es bei dieser Befestigung nicht möglich, eine sichere Schweißverbindung, die bis zum Grund der Fuge zwischen dem Kopf und der Stauchhülse reicht, herzustellen, so daß die Verformung beim Stauchen zu dem bereits erwähnten Flaschenöffnereffekt führt. Des weiteren ist das Herstellen einer umlaufenden Schweißnaht durch Lichtbogen- oder Widerstandspreßschweißen mit umlaufenden Rollen aufwendig und insbesondere bei kleinen Durchmessern unwirtschaftlich.

Der Erfindung liegt die Aufgabe zugrunde, eine besonders zuverlässige Stauchhülsenbefestigung zu schaffen. Insbesondere soll die Verbindung zwischen der Stauchhülse und dem gegebenenfalls vorgesehenen Einsatzteil völlig dicht sein und dennoch keine Gefahr bestehen, daß diese Verbindung ausreißt.

Ausgehend von dieser Aufgabenstellung wird bei einer Alternative der Befestigung der eingangs erwähnten Art vorgeschlagen, daß der Kopf des Einsatzteils mit der Stauchhülse mittels einer Verbindung über eine Anfasung an der Stauchhülse und/oder am Kopf widerstandspreßverschweißt ist. Das Preßschweißen verläuft dabei normalerweise in axialer Richtung der Stauchhülse, wobei die Anfasung einerseits dazu dient, den Stromfluß bei Beginn des Schweißens auf eine kleine Fläche mit hoher Stromstärke zu konzentrieren, so daß das Verschweißen auch bei etwaigen Verunreinigungen beispielsweise in Form von Oxidhäuten schnell eingeleitet wird und zu einem raschen Verschmelzen des freien Endes der Stauchhülse mit dem Kopf des Einsatzteils führt. Andererseits verläuft so die Schweißfläche entsprechend dem Winkel der Anfasung, der bei 45° und weniger bezogen auf die Achsrichtung des Befestigungselements liegen kann, so daß ein vollflächiges Verschweißen unter diesem Winkel gewährleistet ist und der Flaschenöffnereffekt nicht eintritt.

Die Anfasung kann als Übergang zwischen dem Kopf und dem zylindrischen Einsatzteil ausgebildet sein, so daß das freie Ende der Stauchhülse mit seiner scharfen Kante an der Anfasung anliegt und während des Schweißens am stärksten erhitzt wird. Dadurch schmilzt die Stauchhülsenkante an und verschweißt mit der Anfasung zwischen dem Kopf und dem zylindrischen Einsatzteil durch selbsttätiges Zentrieren der Fügeteile über die kegeligen Flächen.

Eine zusätzliche Erhöhung der Stromdichte im Schweißbereich läßt sich durch eine Anfasung am Außenumfang der Hülse erreichen. Während des Schweißens wird dieser Bereich nach außen gedrückt und durch eine um die Stauchhülse gelegte Ringelektrode abgestützt, so daß sich dieser Bereich der Stauchhülse mit dem Kopf des Einsatzteils unter der Wirkung der auf den Kopf angesetzten Schweißelektrode verformt und mit der Anfasung verschweißt.

Zusätzlich zu der erfindungsgemäßen Schweißverbindung über eine Anfasung kann die Hülse eine ihrem flanschartigen Ende benachbarte Wanddickenverminderung aufweisen, um an dieser Stelle einen definierten Stauchbereich zu schaffen. Diese Wanddickenverminderung führt nämlich dazu, daß die Wulstbildung beim Stauchen der Hülse im Bereich der Schwächung stattfindet, während der Bereich mit der größeren Wanddicke unverformt bleibt und so starke mechanische Beanspruchungen beim wulstartigen Verformen der Stauchhülse von der Schweißnaht ferngehalten werden. Außerdem kann gegenüber der radialen Punktverschweißung die Baulänge der Stauchhülse wesentlich kürzer gehalten werden, was eine Kostenreduzierung und einen größeren Freiraum im Blindnietbereich mit sich bringt.

Eine weitere Optimierung wird bei einer vorzugsweisen Ausführungsform durch eine Verjüngung im Sollstauchbereich mit zum Flansch hin anschließender Rändelzone erreicht, wobei in weiterer Ausgestaltung zwischen der Rändelzone und dem Flansch eine Kehle vorgesehen ist. Damit werden erhebliche praktische Vorteile erzielt, nämlich neben einer gezielten Stauchung in einem exakt vorherbestimmbaren Bereich eine bessere Haftung in der Tafel, an der die erfindungsgemäße Befestigung vorgesehen wird, sowie eine Herabsetzung der notwendigen Setzkraft bei der Verarbeitung.

Die Verschweißung des Kopfes des Einsatzteils mit der Stauchhülse kann auch entfallen, wenn nach einer alternativen Aufgabenlösung das Einsatzteil in Höhe der Einbuchtung eine Einschnürung aufweist. Dadurch kann sich die nach innen gerichtete Ausbuchtung im Stauchbereich in die Einschnürung des Einsatzteils hinein verformen, so daß das Einsatzteil, beispielsweise ein Bolzen, der in die Hülse eingeführt wird und dazu dient, die zum Stauchen erforderliche Zugkraft aufzubringen, darin fixiert wird.

Alternativ kann die für das Stauchen erforderliche Zugkraft bei einer Ausführungsform, deren Stauchhülse an dem dem flanschartigen Ende gegenüberliegenden Ende mit Innengewinde versehen ist, dadurch aufgebracht werden, daß zumindest temporär ein Gewindebolzen eingeschraubt wird, über den dann die Stauchkraft auf die Hülse übertragen wird, wonach der Gewindebolzen wieder ausgeschraubt werden kann.

Eine weitere Alternative besteht aus einer an ihrem dem flanschartigen Ende gegenüberliegenden Ende geschlossenen Stauchhülse, die vorzugsweise an diesem geschlossenen Ende einen außenseitig umlaufenden Absatz aufweist, der sich auf der beim Stauchen entstehenden Wulst abstützt, so daß das dem flanschartigen Ende gegenüberliegende Ende der Stauchhülse nicht wie ein Lochstempel beim Stauchen in die Wulst eindringen kann, was alternativ ohne einen derartigen Absatz durch entsprechende Durchmesserrelationen in den verschiedenen Stauchhülsenabschnitten verhindert werden kann. Im übrigen bietet das geschlossene Ende der Stauchhülse verschiedenste Möglichkeiten zum direkten oder indirekten Verbinden weiterer Teile an beispielsweise einer sandwichartig durch die Stauchhülse zusammengehaltenen Tafelverbindung. Die Stauch- und Setzkraft kann in diesem Fall durch Einwirken auf das geschlossene Stauchhülsenende, beispielsweise durch mechanischen Druck von außen, aufgebracht werden.

Insgesamt wird mit der Erfindung in vielfältiger Weise eine zu vernietende Stauchhülse geschaffen, die durch die gerichteten Verformungen optimale Falt- bzw. Stauchwinkel besitzen, so daß die Spannungen vermindert und Rißbildungen vermieden werden. Auch die Nietkräfte sind vergleichsweise niedrig, so daß die zum Stauchen verwendeten Bolzen geringeren Kernquerschnitt besitzen und/oder aus weicherem Material bestehen und/oder die Stauchhülsen (Niete) eine größere Wandstärke erhalten können, so daß sie sich leichter herstellen lassen.

Die Erfindung wird nachstehend anhand eines in der Zeichnung dargestellten Ausführungsbeispiels des näheren erläutert. In der Zeichnung zeigen:
- Fig. 1: eine zylindrische Stauchhülse mit einem zylindrischen Einsatzteil vor dem Verschweißen;
- Fig. 2: eine erfindungsgemäße Befestigung nach dem Verschweißen der Stauchhülse mit dem Einsatzteil;
- Fig. 3: eine erfindungsgemäße Befestigung nach der erfindungsgemäßen Verformung der Stauchhülse;
- Fig. 4: eine Variante der erfindungsgemäßen Befestigung am Beispiel einer Blindnietschraube, teilweise geschnitten;
- Fig. 5: die Befestigung gemäß Fig. 4, vergleichsweise an einer dünnen und einer dickeren Tafel, in Seitenansicht;
- Fig. 6: eine weitere Variante der erfindungsgemäßen Befestigung am Beispiel eines Blindniets mit Bolzen, im teilweisen Längsschnitt;
- Fig. 7: die Befestigung gemäß Fig. 6 in erfindungsgemäßem, gestauchtem Einbauzustand;
- Fig. 8: eine vierte Variante der erfindungsgemäßen Befestigung, bei der die Stauchhülse mit einem Innengewinde versehen ist, im teilweisen Längsschnitt;
- Fig. 9: die Verbindung gemäß Fig. 8 nach der erfindungsgemäßen Verformung der Stauchhülse;
- Fig. 10: eine fünfte Variante der erfindungsgemäßen Befestigung am Beispiel einer einseitig geschlossenen Stauchhülse, im Längsschnitt; und
- Fig. 11: die Befestigung gemäß Fig. 10 im Einbauzustand.

Eine zylindrische Stauchhülse 1 weist ein flanschartiges Ende 2 auf und ist am entgegengesetzten freien Ende mit einer äußeren Anfasung 3 versehen. Im Anschluß an das flanschartige Ende 2 erstreckt sich ein soll-Stauchbereich 4 mit geringerer Wanddicke. Dieser Stauchbereich 4 kann sich über etwa ein Drittel bis zur Hälfte der Länge der unverformten Stauchhülse erstrecken.

Ein Gewindebolzen 5 geht von einem zylindrischen Schaft 6 in einen Kopf 7 über, der etwa den gleichen Außendurchmesser wie die zylindrische Stauchhülse 1 besitzt. Als Übergang befindet sich zwischen dem Kopf 7 und dem Schaft 6 eine Anfasung 8. Die Stauchhülse 1 und der Kopf 7 werden durch Widerstandspreßschweißen miteinander verbunden, indem die Stauchhülse 1 in eine ringförmige Elektrode 9 eingelegt und dort festgeklemmt wird, während eine axial bewegliche Elektrode 10 gegen den Kopf 7 drückt. Beim Einschalten eines an die Elektroden 9, 10 angeschlossenen Schweißgenerators 11 wird der Stromfluß auf die kleine ringförmige Kontaktfläche 12 zwischen der Stirnkante der Stauchhülse 1 und der Anfasung 8 konzentriert, so daß auf kleiner Fläche ein hoher Schweißstrom wirksam ist, die Stirnkante der Stauchhülse 1 schnell anschmilzt und sich mit der Anfasung 8 verbindet. Dabei wird das freie Ende der Stauchhülse 1 mit seiner Anfasung 3 aufgeweitet, füllt die ringförmige Elektrode 9 aus und bildet einen praktisch gleichflächigen Übergang zwischen dem Außenumfang des Kopfes 7 und der Stauchhülse 1. Ein kleiner, sich gelegentlich bildender Grat 14 ist nicht nachteilig, sondern gewährleistet, daß die Wanddicke im Bereich der Schweißnaht ausreichend groß bleibt.

Wird der Gewindebolzen 5 in Richtung auf das flanschartige Ende 2 der Stauchhülse 1 gezogen, bildet die Stauchhülse einen Wulst, so daß zwei zu vernietende, lose aufeinanderliegende Werkstücke zwischen dem Flansch 2 der Stauchhülse 1 und dem nach außen gefalteten Wulst formschlüssig eingeschlossen sind. Dabei wird durch den definierten Soll-Stauchbereich 4 der Wulst so gelegt, daß die dadurch bedingte Verformung der Stauchhülse 1 nicht bis in den Bereich der Schweißnaht 13 gelangt, somit die damit verbundenen mechanischen Beanspruchungen von diesem Bereich ferngehalten werden und auch kein Aufreißen der Verbindung zwischen der Stauchhülse 1 und dem Bolzen 5 möglich ist.

Die Schweißnaht 13 zwischen dem freien Ende der Stauchhülse 1 und der Anfasung 8 im Übergangsbereich zwischen dem Kopf 7 und dem Schaft 6 ist jedoch auch ohne den Soll-Stauchbereich 4 ausreichend fest, um der Beanspruchung beim Stauchen zu widerstehen, da durch die kegelige Form der Schweißnaht 13 bereits die Kerbwirkungen in diesem Bereich ganz erheblich herabgesetzt werden.

Es ist ferner möglich, eine Anfasung nur zwischen dem Kopf 7 und dem Schaft 6 oder nur am Ende der Stauchhülse 1 vorzusehen, um mittels einer Widerstandspreßschweißverbindung eine absolut dichte und ausreichend feste Verbindung zwischen dem Kopf 7 des Gewindebolzens 5 und der Stauchhülse 1 herzustellen.

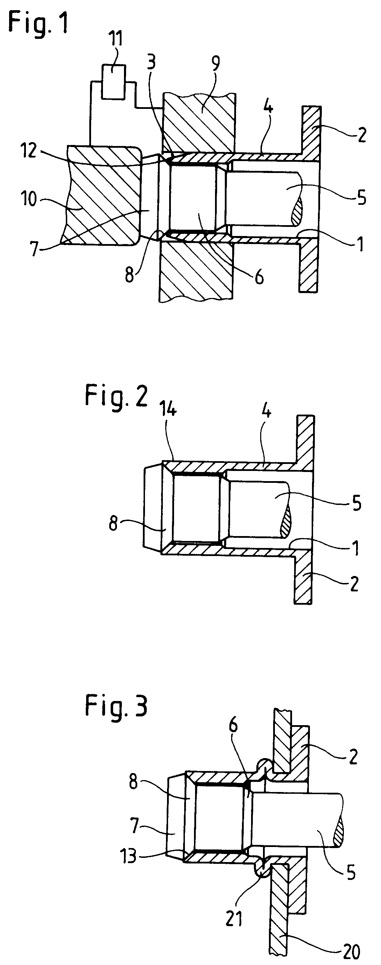

Fig. 3 zeigt die fertiggestellte Befestigung und macht deutlich, wie die Tafel 20 einerseits vom Flansch 2 und andererseits vom Wulst 21 im Bohrungsbereich eingeklemmt umfaßt wird.

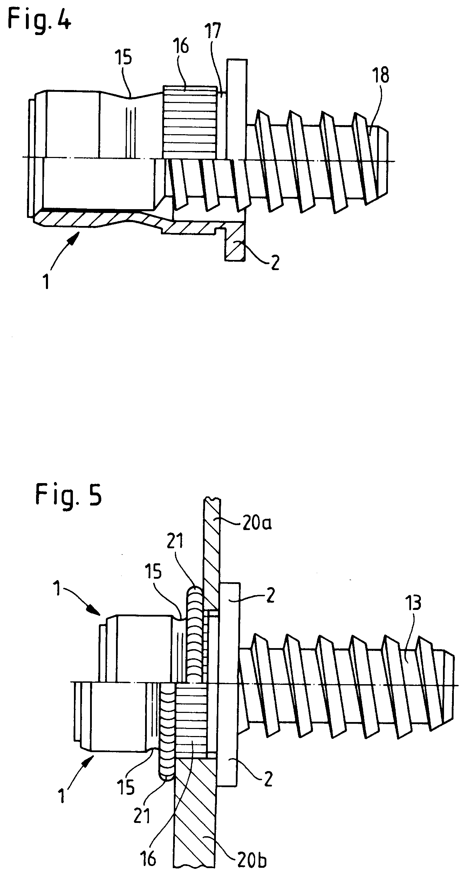

In den Fig. 4 und 5 ist am Beispiel einer Blindnietschraube 18 eine Variante der Stauchhüle 1 dargestellt, die sich insbesondere dadurch von der in den Fig. 1 bis 3 gezeigten unterscheidet, daß sie im Bereich der Sollstauchung eine ausgeprägte, im Außenumfang eingezogene Verjüngung 15 bezitzt, an die sich zum Flansch 2 hin eine Rändelzone 16 anschließt, die dann schließlich in eine zum Flansch 2 benachbarte Kehle 17 übergeht.

Die mit dieser Ausführungsform verbundenen Vorteile werden äußerlich aus Fig. 5 deutlich, wobei die Variante oberhalb der Mittellinie an einer relativ dünnen Tafel 20a und unterhalb an einer demgegenüber dickeren Tafel 20b im Endzustand gezeigt ist. Dabei wird deutlich, daß eine ganz gezielte Stauchung durch die Verjüngung 15 für den ihr zugewandten Bereich der Rändelzone 16 derart erreicht wird, daß der Teil der Rändelzone, der sich in der Bohrung der Tafel 20a bzw. 20b erstreckt - dies ist immer gegeben, wenn die Tafel 20a bzw. 20b dicker als die Kehle 17 breit ist für eine besonders gute Drehfestigkeit sorgt.

Der zunächst über die Tafel hinausragende Bereich der Rändelzone 16 wird gemäß Fig. 5 in die die Tafel auf der dem Flansch 2 gegenüberliegenden Seite einklemmende Wulst 21 gezielt verformt. Durch die ausgeprägte Verjüngung 15, die sich auch nach außen hin durch die doppelkonisch eingezogene Wandung zeigt, wird die notwendige Setzkraft bei der Verarbeitung zum Herstellen der Befestigungen, wie sie in Fig. 5 gezeigt werden, vorteilhaft herabgesetzt, und zwar ohne Beeinträchtigung des Befestigungsergebnisses hinsichtlich der Haftung und der damit verbundenen Betriebssicherheit.

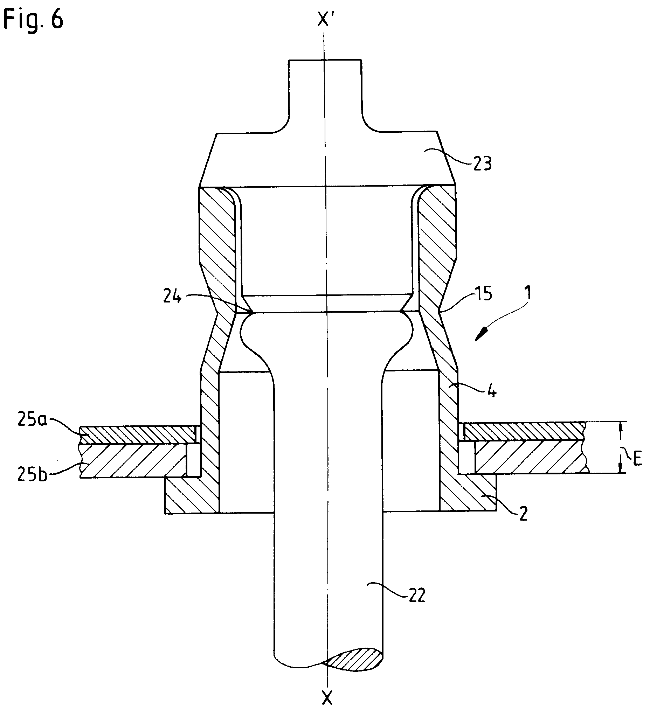

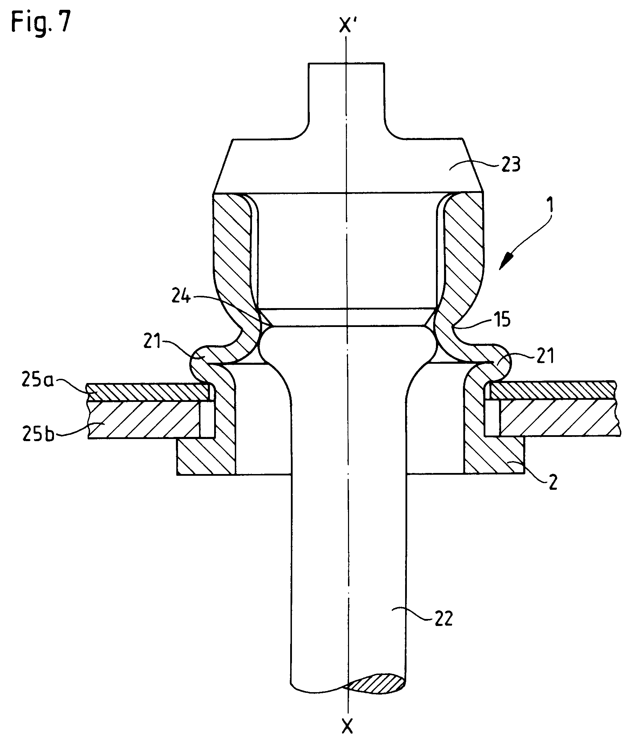

In den Fig. 6 und 7 ist eine weitere Ausführungsform der Erfindung dargestellt, bei der die Stauchhülse 1 eine ähnliche Form wie die gemäß den Fig. 4 und 5 besitzt, das Einsatzteil hier jedoch aus einem Bolzen 22 besteht, der sich mit seinem umlaufenden Kragen 23 auf dem freien Ende der Stauchhülse 1 abstützt und in Höhe der Verjüngung oder Einbuchtung 15 mit einer umlaufenden Einschnürung 24 versehen ist.

Wie Fig. 7 zeigt, legt sich die Verjüngung bzw. Einbuchtung 15 im gestauchten Zustand der Hülse 1, also in deren Einbauzustand nach innen gewölbt in die umlaufende Einschnürung 24, so daß dadurch der Bolzen 22, der zum Aufbringen der erforderlichen Stauchkraft über seinen Kragen 23 auf die Hülse 1 verwendet wird, fest in der gestauchten Hülse sitzt, die dann mit dem nach außen gewölbten Teil ihres definierten Stauchbereichs 4 die im vorliegenden Fall zwei Bleche 25a und 25b in Form der Wulst 21 zusammen mit dem flanschartigen Ende 2 umfaßt bzw. an diesen, diese zusammenhaltend in gewünschter Weise befestigt ist.

Diese vorteilhafte Stauchung mit den erzielten Halteeffekten wird im wesentlichen dadurch erreicht, daß gezielt, der Einschnürung 24 gegenüberliegend, die Einbuchtung 15 vorgesehen ist, und zwar in der Weise, daß die Wandstärke vom freien Ende der Stauchhülse 1 zunächst über einen gewissen Bereich konstant bleibt, sich dann von außen her bis zur Einbuchtung 15 verjüngend reduziert, während innenseitig der Verlauf weiterhin zylinderförmig ist, und dann von der Einbuchtung 15 aus Innen- und Außenfläche parallel konisch sich soweit erweitern, bis der Außendurchmesser der Hülse wieder das ursprüngliche Maß besitzt, während der Innendurchmesser in dem bis zum flanschartigen Ende reichenden Bereich zylindrisch und größer ist als im Bereich des freien Endes, d.h. der Abstand der Wandung von der Mittellängsachse X-X' ist im Bereich des Flansches bzw. Kopfes 2 der Hülse 1 größer als am gegenüberliegenden freien Ende. Dadurch, daß die Einbuchtung im Außendurchmesser kleiner oder gleich der Innenwandung des dem flanschartigen Ende 2 benachbarten Bereichs ist, kann beim Stauchen der Bolzen 2 nicht wie ein Lochstempel durchgezogen werden, sondern der dickere Endbereich der Stauchhülse - und damit auch der Bolzen 22 über seinen Kragen 23 - stützt sich, wie auch aus Fig. 7 hervorgeht, dann auf dem mäanderförmig verformten Bereich ab mit der erwähnten Folge des Verklemmens und Befestigens.

Falls, wie im dargestellten Ausführungsbeispiel mehrere Bleche mit einer Gesamtdicke E zu vernieten sind, sollte die Länge der konisch nach unten sich erweiternden Hülsenwandung größer sein als die Differenz zwischen der Länge des zylindrischen, sich an den Kopf 2 anschließenden Wandteils und der Gesamtdicke E. Auf diese Weise wird ein besonders guter Kniehebeleffekt erreicht, wodurch die Bleche 25a und 25b gut gegeneinander verspannt werden.

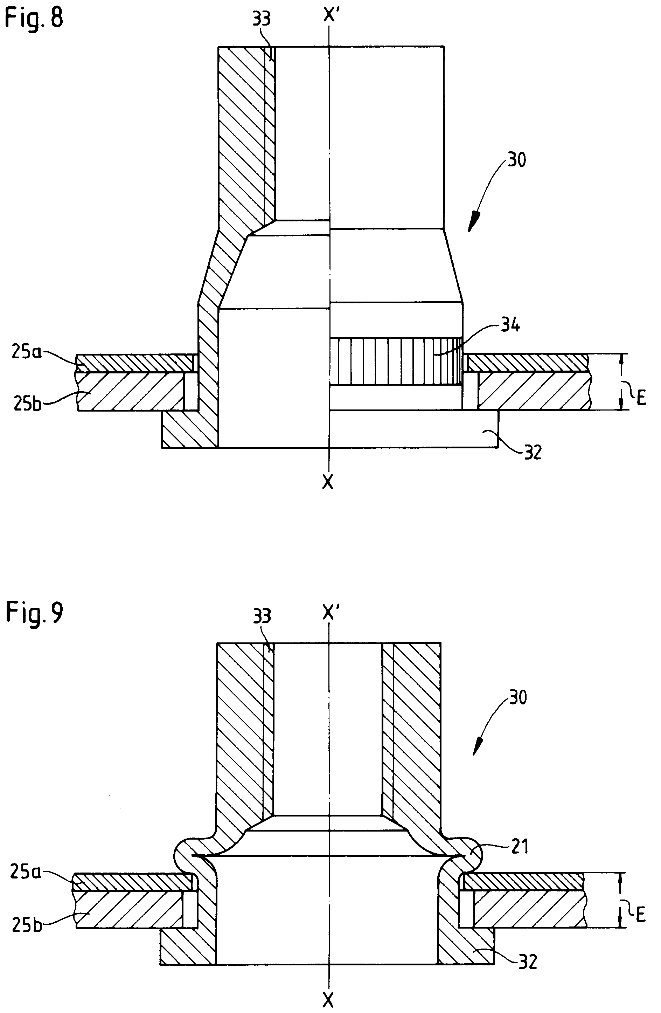

Die Stauchhülse 30 gemäß den Fig. 8 und 9 ist wiederum ähnlich der gemäß den Fig. 4 und 5 geformt, wobei allerdings der dem Flansch oder Kopf 32 benachbarte, zylinderförmige Bereich über einen sich in der Dicke vergrößernden, konisch sich verengenden Bereich in das Endteil relativ großer Wanddicke übergeht, das ein Innengewinde 33 besitzt. In dieses Innengewinde wird ein nicht dargestellter, mit entsprechendem Außengewinde versehener Bolzen geschraubt, der über das untere Ende 32 der Hülse hinausragt, so daß an ihm die Stauchkraft als Zugkraft angreifen kann, um die Stauchhülse 30 dann in den Befestigungszustand gemäß Fig. 5 zu versetzen, indem der Sollstauchbereich sich zur Wulst 21 verformt, die wiederum die beiden Bleche 25a und 25b fest miteinander verbindet. Danach kann der Zugbolzen wieder ausgeschraubt werden.

Auch hier sind die Durchmesserrelationen so gewählt, daß ein verklemmendes Abstützen des freien Endes der Hülse erfolgt, nämlich daß sich das das Innengewinde tragende Teil satt auf dem Wulst 21 abstützen kann und sichergestellt ist, daß der Wulst sich nach außen, die Bleche 25a und 25b verklemmend verformt. Im dargestellten Ausführungsbeispiel entspricht der Außendurchmesser des Gewindeabschnitts etwa dem des Innendurchmessers des dem Kopf 32 benachbarten Bereichs, der im übrigen außen mit einer Rändelzone 34 versehen ist, die die Drehfestigkeit der Stauchhülse im eingebauten Befestigungszustand erhöht. Auch hier sind die Längenabmessungen der Wandteile der Stauchhülse 30 wieder so gewählt, daß der konische Bereich länger ist als die Differenz zwischen der Länge des kopfnahen zylindrischen Bereichs und der Gesamtdicke E der zusammenzuhaltenden Bleche 25a und 25b, die als Widerlager zum Wulst 21 vom flanschartigen Kopf 32 untergriffen werden (siehe Fig. 9).

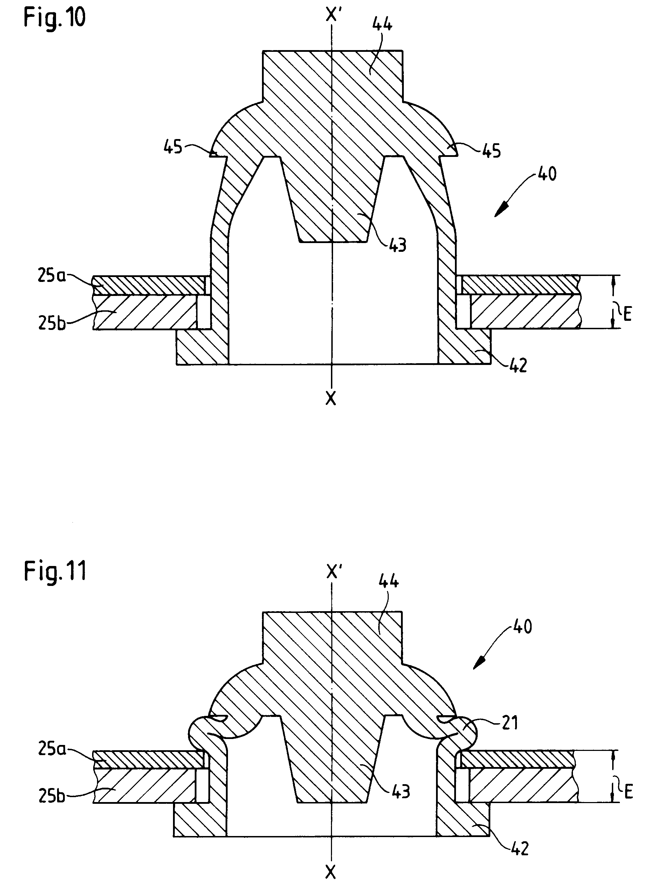

Eine weitere Variante einer erfindungsgemäßen Stauchhülse 40 ist in den Fig. 10 und 11 dargestellt, und zwar wiederum einmal im ungestauchten, durch die entsprechenden Bohrungen der zusammen zu haltenden Bleche 25a und 25b hindurchgeführten (Fig. 10) und im gestauchten, die Bleche 25a und 25b zusammenklemmenden Zustand (Fig. 11).

Das dem Kopf 42 gegenüberliegende Hülsenende ist domartig geschlossen, wobei zentrische Ansätze 43 und 44 nach innen und außen ragen, die dem Angriff der Zug- bzw. Druckkraft zum Stauchen oder auch der Befestigung weiterer Teile oder sonstigen Zwecken dienen können. Von besonderer Bedeutung ist der außenseitig in Höhe des geschlossenen Endes umlaufende Absatz 45, dessen Außendurchmesser - aus den zuvor bereits erwähnten Gründen optimaler Verformung und zum Zwecke eines garantiert nach außen sich wölbenden Wulstes 21 - etwa gleich dem Außendurchmesser des dem Kopf 2 benachbarten zylindrischen Bereichs ist. Dadurch ergibt sich im gestauchten Zustand dann wiederum die im Zusammenwirken mit dem Kopf 42 die Bleche 25a und 25b gemäß Fig. 11 zusammenklemmende, nach außen verwölbte Wulst 21, auf der sich dann wiederum zur Verhinderung des Durchzugs des geschlossenen Endes durch die Blechöffnungen in Art eines Stanzstempels der Absatz 45 abstützen kann. Um die für die Herstellung der Verbindung erforderliche Stabilität auf alle Fälle zu garantieren, ist auch in diesem Ausführungsbeispiel der konische Bereich ähnlich wie beim Ausführungsbeispiel gemäß Fig. 8 in seiner Wandstärke zum geschlossenen Ende hin zunehmend ausgebildet.

## Patentansprüche

1. Befestigung, insbesondere an nur einseitig zugänglichen Durchgangsbohrungen aus
- einer zumindest teilweise zylindrischen Stauchhülse (1) mit flanschartigem Ende (2),
- einem Einsatzteil (5, 6) mit einem Kopf (7) etwa gleichen Durchmessers wie die Stauchhülse (1),
- dessen Kopf (7) mit der Stauchhülse (1) widerstandspreßverschweißt ist.

2. Befestigung nach Anspruch 1, dadurch gekennzeichnet, daß der Kopf (7) mit der Stauchhülse (1) durch axialen Druck radial verschweißt ist.

3. Befestigung nach Anspruch 1 oder 2, gekennzeichnet durch eine Anfasung (3, 8) an der Stauchhülse (1) und/oder am Kopf (7).

4. Befestigung nach einem oder mehreren der Ansprüche 1 bis 3, gekennzeichnet durch eine Anfasung (8) als Übergang zwischen dem Kopf (7) und der Stauchhülse (1).

5. Befestigung nach einem oder mehreren der Ansprüche 1 bis 4, gekennzeichnet durch eine Anfasung (3) am Außenumfang der Stauchhülse (1).

6. Befestigung nach einem oder mehreren der Ansprüche 1 bis 5, gekennzeichnet durch eine dem flanschartigen Ende (2) benachbarte Wanddickenverminderung (4) der Stauchhülse (1) als Sollstauchbereich.

7. Befestigung nach Anspruch 6, gekennzeichnet durch einen im Flanschbereich (2) und in dem ihm benachbarten Bereich (4) gegenüber dem übrigen Stauchhülsenbereich größeren Innendurchmesser.

8. Befestigung nach Anspruch 6 oder 7, gekennzeichnet durch eine Verjüngung (Einbuchtung) (15) im Sollstauchbereich (4) mit zum Flansch (2) hin anschließender Rändelzone (16).

9. Befestigung nach Anspruch 8, gekennzeichnet durch eine Kehle (17) zwischen der Rändelzone (16) und dem Flansch (2).

10. Befestigung, insbesondere an nur einseitig zugänglichen Durchgangsbohrungen aus
- einer zumindest teilweise zylindrischen Stauchhülse (1) mit flanschartigem Ende (2),
- einem Einsatzteil (5, 6) mit einem Kopf (7) etwa gleichen Durchmessers wie die Stauchhülse (1),
- und mit einer Einschnürung (24) des Einsatzteils (22) in Höhe der Einbuchtung (15),
insbesondere nach Anspruch 8 oder 9.

11. Befestigung nach einem oder mehreren der Ansprüche 8 bis 10, gekennzeichnet durch einen konischen Wandbereich der Stauchhülse (1) zwischen ihren Bereichen unterschiedlicher Innendurchmesser.

12. Befestigung, insbesondere an nur einseitig zugänglichen Durchgangsbohrungen aus
- einer zumindest teilweise zylindrischen Stauchhülse (30) mit flanschartigem Ende (32),
- die an ihrem anderen Ende mit einem Innengewinde (33) versehen ist,
insbesondere nach Anspruch 8 oder 9.

13. Befestigung nach Anspruch 12, gekennzeichnet durch eine größere Wanddicke der Stauchhülse (30) im Bereich ihres Innengewindes (33) als in ihrem übrigen Wandbereich.

14. Befestigung nach Anspruch 12 oder 13, gekennzeichnet durch einen konischen Wandbereich der Stauchhülse (30) zwischen ihren Wandbereichen unterschiedlicher Wandstärken.

15. Befestigung nach einem oder mehreren der Ansprüche 12 bis 14, dadurch gekennzeichnet, daß der Außendurchmesser des Gewindebereichs etwa dem Innendurchmesser des Bereichs geringerer Hülsenwandstärke entspricht.

16. Befestigung nach einem oder mehreren der Ansprüche 12 bis 15, gekennzeichnet durch eine Rändelzone (34) im Bereich geringerer Hülsenwandstärke.

17. Befestigung nach einem oder mehreren der Ansprüche 12 bis 16, gekennzeichnet durch eine Kehle zwischen der Rändelzone (34) und dem Flansch (32).

18. Befestigung, insbesondere an nur einseitig zugänglichen Durchgangsbohrungen aus
- einer zumindest teilweise zylindrischen Stauchhülse (40) mit flanschartigem Ende (42),
- die an ihrem anderen Ende geschlossen ist.

19. Befestigung nach Anspruch 18, gekennzeichnet durch einen außenseitig umlaufenden Absatz (45) am geschlossenen Ende der Hülse (40).

20. Befestigung nach Anspruch 18 oder 19, gekennzeichnet durch einen zentrischen Inneneinzug (43) am geschlossenen Ende der Hülse (40).

21. Befestigung nach einem oder mehreren der Ansprüche 18 bis 20, gekennzeichnet durch einen außenseitigen, zentrischen Dom (44) am geschlossenen Ende der Hülse (40).
